# FASCICULE DE BREVET EUROPEEN

(11) **EP 0 479 656 B1**
(45) Date de publication et mention de la délivrance du brevet: **20.10.1993**
(21) Numéro de dépôt: 91402587.9
(22) Date de dépôt: 27.09.1991
(51) Int. Cl.: A01M 7/00, A01G 17/00, B05B 3/02, B05B 15/04

(54) **Appareil de traitement de la végétation**
Vorrichtung zur Behandlung von Pflanzen
Device for treating vegetation

(30) Priorité: 01.10.1990 FR 9012057
(43) Date de publication de la demande: 08.04.1992
(73) Titulaire: BERTHOUD S.A., F-69220 Belleville sur Saône (FR)
(72) Inventeur: Ballu, Patrick Jean-Marie, F-51100 Reims (FR)
(74) Mandataire: Colas, Jean-Pierre

(56) Documents cités:
- FR-A- 2 247 885
- FR-A- 2 407 025
- FR-A- 2 446 596
- US-A- 3 221 993
- US-A- 3 883 076
- US-A- 4 609 145

## Description

La présente invention est relative à un appareil de traitement de la végétation, comprenant un ventilateur capable de produire un courant d'air, et des moyens pour pulvériser un produit de traitement dans ledit courant d'air.

Actuellement, les appareils de ce type qu'on trouve dans le commerce sont équipés d'un ventilateur axial ou centrifuge, entraîné par la prise de force d'un tracteur par le moyen d'une transmission mécanique, ou encore par le moyen d'une transmission hydraulique comportant une pompe, habituellement entrai- née par ladite prise de force, et alimentant un moteur hydraulique par l'intermédiaire de conduits sous pression.

On peut encore trouver, quoique plus rarement, des ventilateurs entraînés par un générateur électrique. Des moyens, tels qu'une boîte de vitesse, permettent, dans certains cas, de changer à l'arrêt le rapport entre la vitesse de la prise de force du tracteur, et la vitesse de rotation du ventilateur. On trouve aussi des ventilateurs dont le pas peut être changé à l'arrêt.

Lorsqu'on désire traiter des végétaux, tels que des arbres fruitiers, présentant une certaine hauteur, il est important que le débit du ventilateur ne varie pas avec la vitesse du moteur du tracteur. Dans le cas contraire, la cime des arbres risque de ne pas être atteinte lors d'un ralentissement et, au contraire, le courant d'air risque d'aller trop loin lors d'une accélération.

Le brevet US-A-4.609.145 décrit un appareillage selon le préambule de la revendication 1, qui permet de faire varier la vitesse de rotation du ventilateur d'un appareil d'épandage de pesticides, grâce à une commande placée dans la cabine de conduite, cette commande actionnant la valve d'alimentation d'un moteur hydraulique, lequel actionne le ventilateur. Habituellement, la pression du fluide d'alimentation d'un moteur hydraulique monté sur un tracteur est fournie par une pompe actionnée par la prise de force dudit tracteur. Cela signifie que, si le tracteur a une baisse de régime, le débit du ventilateur baissera également. Ce sera donc précisément au moment où le conducteur du tracteur doit faire un tournant, par exemple, ou faire face à une difficulté, que le débit du ventilateur s'écartera de la valeur prévue, et qu'il lui faudra, en plus, surveiller le régime de celui-ci. Cette disposition, on le voit, n'est pas satisfaisante.

La présente invention a donc pour but de fournir un appareil du type indiqué ci-dessus, et qui permette d'assurer un jet d'air de puissance constante, indépendamment des moyens d'entraînement du ventilateur.

Pour obtenir ce résultat, l'appareil selon l'invention comporte au moins un capteur apte à mesurer en continu la vitesse de rotation du ventilateur ou le débit du courant d'air qu'il produit et à émettre des signaux en réponse, et des moyens pour commander les moyens pour faire varier ladite vitesse de rotation ou les caractéristiques du ventilateur en fonction des signaux émis par le capteur et d'une valeur de consigne.

Le capteur peut être sensible à la vitesse d'entraînement du ventilateur. Il s'agira alors d'un appareil du type tachymètre, relié soit à l'entraînement du ventilateur, soit actionné par le ventilateur lui-même.

Selon un autre mode de réalisation, le capteur est placé dans le courant d'air et est sensible à la vitesse ou à la pression de celui-ci. Dans ce cas, le capteur peut comporter un tube de Pitot, ou un "ventimètre" comportant une petite turbine inductive, ces deux types de capteurs se trouvent dans le commerce.

Suivant une réalisation particulièrement simple et avantageuse du point de vue économique, les moyens pour faire varier la vitesse de rotation ou les caractéristiques du ventilateur comportent des ailettes, ou ventelles, d'orientation variable, placées sur l'aspiration du ventilateur. Un moyen mécanique simple pourra commander l'orientation des ventelles, et agir ainsi efficacement sur le débit d'air produit, en fonction des données relevées par le capteur.

On peut prévoir, à la place du dispositif à ventelles, des volets à peu près perpendiculaires à l'écoulement d'air d'aspiration, montés sur des pivots parallèles à cet écoulement et conformés de façon à créer un passage d'aspiration de section variable, à la façon des diaphragmes réglables de certains appareils photographiques. Cette solution est d'un prix assez comparable à la précédente, et l'adoption de l'une ou l'autre peut résulter de considérations aérodynamiques.

Suivant une réalisation un peu plus chère, mais bien au point actuellement, le ventilateur comporte une hélice, et on utilise des moyens pour faire varier en fonctionnement le pas de ladite hélice.

Il est encore possible d'utiliser des moyens agissant directement sur la vitesse de rotation du ventilateur, par exemple une transmission mécanique à dè- multiplication variable , ou une transmission hydraulique à débit variable, ou encore, au cas où le ventilateur est entraîné par un moteur électrique, d'équiper celui-ci d'un variateur de vitesse.

L'homme du métier comprendra qu'un certain nombre de ces diverses modalités peuvent être utilisées simultanément.

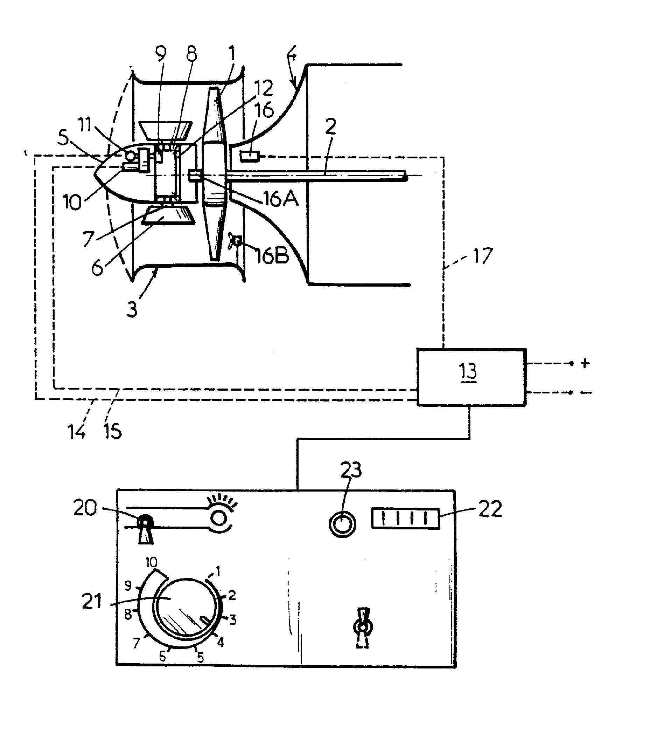

L'invention va maintenant être décrite de façon plus précise à l'aide d'un exemple non limitatif, illustré par la figure unique, qui est un schéma théorique de l'installation.

Une hélice 1, montée sur un arbre 2 relié par des moyens non représentés à la prise de force d'un tracteur, également non représentée, est montée à l'intérieur d'une virole 3 de guidage du courant d'air. Un déflecteur 4 dévie le courant d'air créé par l'hélice, afin de l'envoyer dans une direction perpendiculaire à celle de l'arbre 2. Du côté de l'admission, un dôme fixe 5, disposé axialement par rapport à l'hélice 1, porte des ventelles 6, également réparties autour de l'axe, et dont deux sont représentées sur la figure. Le dôme contient encore des moyens de commande de l'orientation des ventelles. Celles-ci sont montées chacune sur un arbre 7 perpendiculaire à l'arbre 2 de l'hélice, et qui porte une couronne dentée 8, laquelle engrène sur un pignon d'entraînement 9, d'axe parallèle à l'arbre 2, et qui est monté sur un motoréducteur 10, capable de l'entraîner à faible vitesse: deux tours par minute. Un capteur de position 11 permet de connaître à tout moment la position exacte des ventelles. Une couronne dentée 12, qui engrène sur les couronnes 8, assure la synchronisation des mouvements de toutes les ventelles.

Un boîtier de commande 13 est relié d'une part au capteur de position 11 par l'intermédiaire d'un câble 14, et au motoréducteur 10 par l'intermédiaire d'un câble d'alimentation 15.

Par ailleurs, le boîtier est relié à un capteur 16 électromagnétique, de la vitesse de l'hélice, par un câble 17. Dans une variante, le capteur 16 est remplacé par une dynamo tachymétrique 16A, placée en bout de l'arbre 2. Dans une aure variante, le capteur 16 est remplacé par un ventimètre 16B placé sur le refoulement de l'hélice 1.

On a représenté sur la partie inférieure de la figure la partie d'affichage du boîtier de commande 13. La référence 20 désigne un interrupteur de mise sous tension, la référence 21 représente la commande du potentiomètre permettant de choisir le débit d'air désiré. 22 désigne un tableau d'affichage de la vitesse de ventilation. 23 désigne un témoin d'alarme, qui émet un signal lumineux, lorsque la vitesse du ventilateur dépasse une limite choisie à l'avance, les ventelles étant arrivées au bout de leur course.

Le fonctionnement est le suivant : on fait tourner le ventilateur à son régime nominal, par exemple 2200 tours/minute, puis l'opérateur ajuste le débit d'air à la puissance désirée par action sur la commande 21 de potentiomètre, qui agit par l'intermédiaire du boîtier de commande 13. Si on utilise un capteur 16, 16Asen- sible à la vitesse de rotation de ventelles, un programme mis en place en usine fait tourner le motoréducteur 10 d'un angle lié à l'écart entre la vitesse réelle et la vitesse nominale par une loi, par exemple une loi proportionnelle.

Si on utilise un capteur 16B, sensible au débit d'air, le boîtier de commande 13 compare le débit d'air mesuré à chaque instant avec ledit débit d'air prévu, établi à l'aide de la commande 21, et commande un déplacement des ventelles 6, par rotation du motoréducteur 10, jusqu'à ce que cet écart tombe au-dessous d'une valeur fixée à l'avance.

Dans les deux cas, l'établissement du schéma électrique du boîtier de commande est assez simple pour être à la portée de tout homme du métier.

## Revendications

1. Appareil de traitement de la végétation, comprenant un ventilateur capable de produire un courant d'air, des moyens pour pulvériser un produit de traitement dans ledit courant d'air, des moyens d'entraînement dudit ventilateur, des moyens permettant de faire varier en continu la vitesse de rotation ou les caractéristiques du ventilateur,
caractérisé en ce qu'il comprend :
- au moins un capteur (16, 16A, 16B) apte à mesurer en continu ladite vitesse de rotation ou le débit du courant d'air que produit ledit ventilateur, et à émettre des signaux en réponse,
- et des moyens pour commander lesdits moyens pour faire varier la vitesse de rotation ou les caractéristiques du ventilateur, en fonction des signaux émis par le capteur et d'une valeur de consigne.

2. Appareil selon la revendication 1, caractérisé en ce que ledit capteur (16, 16A) est sensible à la vitesse d'entraînement du ventilateur.

3. Appareil selon la revendication 1, caractérisé en ce que ledit capteur (16B) est placé dans le courant d'air et est sensible à la vitesse ou à la pression de celui-ci.

4. Appareil selon l'une des revendications 1 à 3, caractérisé en ce que lesdits moyens pour faire varier la vitesse de rotation ou les caractéristiques du ventilateur comportent des ailettes ou ventelles (6), d'orientation variable, placées sur l'aspiration du ventilateur.

5. Appareil selon l'une des revendications 1 à 3, caractérisé en ce que lesdits moyens pour faire varier la vitesse de rotation ou les caractéristiques du ventilateur comportent des volets à peu près perpendiculaires à l'écoulement d'air d'aspiration du ventilateur, montés sur des pivots parallèles à cet écoulement et conformés de façon à créer un passage d'aspiration de section variable.

6. Appareil selon l'une des revendications 1 à 5, et dans lequel le ventilateur comprend une hélice, caractérisé en ce que lesdits moyens pour faire varier la vitesse de rotation ou les caractéristiques du ventilateur comprennent des moyens pour faire varier en fonctionnement le pas de ladite hélice.

7. Appareil selon l'une des revendications 1 à 6, caractérisé en ce que lesdits moyens pour faire varier la vitesse de rotation ou les caractéristiques du ventilateur comprennent une transmission mécanique à démultiplication variable.

8. Appareil selon l'une des revendications 1 à 6, caractérisé en ce que lesdits moyens pour faire varier la vitesse de rotation ou les caractéristiques du ventilateur comprennent une transmission hydraulique à débit variable.

9. Appareil selon l'une des revendications 1 à 6, caractérisé en ce que lesdits moyens pour faire varier la vitesse de rotation ou les caractéristiques du ventilateur comprennent un moteur électrique avec variateur de vitesse.

## Patentansprüche

1. Vorrichtung zur Behandlung der Vegetation, die umfaßt einen Ventilator, der in Lage ist, einen Luftstrom zu erzeugen, Mittel zum Pulverisieren eines Behandlungsprodukts in dem genannten Luftstrom, Mittel zum Antreiben des genannten Ventilators, Mittel, die es ermöglichen, die Rotationsgeschwindigkeit oder die Ventilator-Eigenschaften kontinuierlich zu verändern, dadurch gekennzeichnet, daß sie umfaßt:
- mindestens einen Sensor (16, 16A, 16B), der dazu geeignet ist, die genannte Rotationsgeschwindigkeit oder den Ausstoß des Luftstroms, den der genannte Ventilator erzeugt, kontinuierlich zu messen und Antwortsignale auszusenden,
- und Mittel, um die genannten Mittel zur Veränderung der Rotationsgeschwindigkeit oder der Ventilator-Eigenschaften als Funktion der durch den Sensor ausgesendeten Signale und eines eingestellten Wertes zu steuern.

2. Vorrichtung nach Anspruch 1, dadurch gekennzeichnet, daß der genannte Sensor (16, 16A) empfindlich ist für die Antriebsgeschwindigkeit des Ventilators.

3. Vorrichtung nach Anspruch 1, dadurch gekennzeichnet, daß der genannte Sensor (16B) in dem Luftstrom angebracht ist und empfindlich ist für die Geschwindigkeit oder den Druck desselben.

4. Vorrichtung nach einem der Ansprüche 1 bis 3, dadurch gekennzeichnet, daß die genannten Mittel zur Veränderung der Rotationsgeschwindigkeit oder der Ventilator-Eigenschaften, Flügel oder Klappen (6) zur variablen Einstellung aufweisen, die auf der Ansaugung des Ventilators angebracht sind.

5. Vorrichtung nach einem der Ansprüche 1 bis 3, dadurch gekennzeichnet, daß die genannten Mittel zur Veränderung der Rotationsgeschwindigkeit oder der Ventilator-Eigenschaften Klappen aufweisen, die zu dem Luftstrom der Ventilator-Ansaugung fast senkrecht stehen und auf parallelen Drehgelenken an diesem Strom befestigt und so geformt sind, daß ein Ansaugkanal mit einem variablen Querschnitt gebildet wird.

6. Vorrichtung nach einem der Ansprüche 1 bis 5, bei der der Ventilator einen Propeller umfaßt, dadurch gekennzeichnet, daß die genannten Mittel zur Veränderung der Rotationsgeschwindigkeit oder der Ventilator-Eigenschaften Mittel umfassen, um den Rundlauf des genannten Propellers während des Betriebs zu verändern.

7. Vorrichtung nach einem der Ansprüche 1 bis 6, dadurch gekennzeichnet, daß die genannten Mittel zur Änderung der Rotationsgeschwindigkeit oder der Ventilator-Eigenschaften eine mechanische Transmission mit variabler Leistung umfassen.

8. Vorrichtung nach einem der Ansprüche 1 bis 6, dadurch gekennzeichnet, daß die genannten Mittel zur Veränderung der Rotationsgeschwindigkeit oder der Ventilator-Eigenschaften eine hydraulische Transmission mit variabler Leistung umfassen.

9. Vorrichtung nach einem der Ansprüche 1 bis 6, dadurch gekennzeichnet, daß die genannten Mittel zur Veränderung der Rotationsgeschwindigkeit oder der Ventilator-Eigenschaften einen elektrischen Motor mit einem Geschwindigkeitsvariator umfassen.

## Claims

1. An apparatus for treatment of vegetation, comprising a blower which is capable of producing a current of air, means for atomising a treatment product in said current of air, drive means for said blower, means permitting for continuously varying the speed of rotation or the characteristics of the blower, characterized in that it comprises :
- at least one sensor (16, 16A, 16B) which is capable of measuring continuously the said speed of rotation or the flow of that current of air which is produced by the said blower, and to emit signals in response,
- and means for controlling the said means for varying the speed of rotation or the characteristics of the blower as a function of signals from the sensor and of a set value.

2. The apparatus as claimed in claim 1, wherein said sensor (16, 16A) is sensitive to the drive speed of the blower.

3. The apparatus as claimed in claim 1, wherein said sensor (16B) is located in the current of air and is sensitive to the speed or to the pressure of the latter.

4. The apparatus as claimed in one of claims 1 to 3, wherein said means for varying the speed of rotation or the characteristics of the blower comprise blades or vanes (6) of variable orientation located on the suction of the blower.

5. The apparatus as claimed in one of claims 1 to 3, wherein said means for varying the speed of rotation or the characteristics of the blower comprise flaps which are approximately perpendicular to the flow of suction air of the blower, mounted on pivots parallel to this flow and formed so as to create a suction passage of variable cross- section.

6. The apparatus as claimed in one of claims 1 to 5, wherein the blower comprises a propeller, and said means for varying the speed of rotation or the characteristics of the blower comprise means for varying in operation the pitch of said propeller.

7. The apparatus as claimed in one of claims 1 to 6, wherein said means for varying the speed of rotation or the characteristics of the blower comprise a mechanical transmission with variable gear reduction.

8. The apparatus as claimed in one of claims 1 to 6, wherein said means for varying the speed of rotation or the characteristics of the blower comprise a hydraulic transmission of variable output.

9. The apparatus as claimed in one of claims 1 to 6, wherein said means for varying the speed of rotation or the characteristics of the blower comprise an electric motor with a variable speed drive.
